# EUROPEAN PATENT SPECIFICATION

(11) **EP 4 130 174 B1**
(45) Date of publication and mention of the grant of the patent: **17.07.2024**
(21) Application number: 21800307.7
(22) Date of filing: 30.04.2021
(51) Int. Cl.: C09D 11/30, C09D 5/18, C09K 21/00, D06B 1/02, C09D 11/102, C09D 11/107, C09D 11/322, C09D 11/38, D06M 14/14, D06M 11/45, D06M 11/46, D06M 11/48, D06M 11/71, D06M 11/76, D06M 11/79, D06P 1/44, D06P 1/52, D06M 11/44, D06P 1/673, D06P 5/30

(54) **FLAME-RETARDANT HYBRID INK COMPOSITION**
FLAMMHEMMENDE HYBRIDTINTENZUSAMMENSETZUNG
COMPOSITION D'ENCRE HYBRIDE RETARDATRICE DE FLAMME

(30) Priority: 07.05.2020 ES 202030407
(43) Date of publication of application: 08.02.2023
(73) Proprietor: Torrecid, S.A., 12110 Alcora (Castellón) (ES)
(72) Inventor: RUIZ VEGA, Óscar, 12110 Alcora (Castellón) (ES); BRUGADA SECO, Laura, 12110 Alcora (Castellón) (ES); CORTS RIPOLL, Juan Vicente, 12110 Alcora (Castellón) (ES); CONCEPCIÓN HEYDORN, Carlos, 12110 Alcora (Castellón) (ES)
(74) Representative: Carlos Hernando, Borja
(86) International application number: PCT/ES2021/070297
(87) International publication number: WO 2021/224522

(56) References cited:
- EP-A1- 2 837 658
- WO-A1-2006/100277
- WO-A1-2016/042097
- WO-A1-2019/068946
- CN-A- 107 163 684
- US-A- 3 976 497
- US-A1- 2015 252 170
- US-A1- 2019 352 528

## Description

The present invention falls within the field of inkjet inks using drop-on-demand (DoD) technology which simultaneously provide a chromatic and flame-retardant effect when applied to textiles.

### STATE OF THE ART

The state of the art includes examples of flame-retardant inks. Patent application CN110183904 describes a fireproof ink, a method for preparing same and a fireproof film. According to patent application CN110183904, the ink is composed of 60-70 parts of polyester modified acrylic resin, 8-10 parts of cellulose solution, 8-12 parts of cyclic phosphate as flame-retardant material, 1.9-3 parts dispersant and levelling additive, 3-24 parts of organic solvents selected from n-propyl acetate, ethyl acetate and propylene glycol methyl ether acetate. The solid content of the cellulose solution is comprised between 10-20%. For their part, the solvents of the cellulose solution are selected from an ester, toluene, butylene and at least two ketone solvents. The ink is intended to generate layers on PET. However, patent application CN110183904 presents a series of limitations. On one hand, both the use of cyclic phosphate and cellulose are unfeasible for the formulation of inks intended for inkjet printing since both compounds are insoluble in water- and glycol-based media. On the other hand, it is also not possible to stabilise it as an insoluble particle by means of dispersants that meet the stability requirements required by this technology. Moreover, the cellulose solution contains toluene, butylene and at least two ketone solvents. However, these solvents cannot be used in the formulation of inkjet inks since they degrade the internal plastic components of the injection heads and, moreover, they have a very high evaporation rate, which causes the ink to dry too quickly when it comes in contact with the holes in the injection head, causing them to become blocked. In addition, this application does not provide any information about fundamental aspects in the formulation of an ink such as viscosity and surface tension.

On the other hand, patent application WO2020/055295 describes an ecological flame-retardant composition comprising a 4% solution of an ammonium sulphate salt and another 4% solution of disodium hydrogen phosphate together with vinegar as a softener. Again, the components used as flame-retardant material are unfeasible for the formulation of inks intended for DoD inkjet printing technology, since they are insoluble in water- and glycol-based media and, moreover, it is also not possible to stabilise it as an insoluble particle by means of dispersants that meet the stability requirements required by this technology. It is also important to note that it uses vinegar as a softener, which, given the acidic nature thereof, degrades the components of the injection heads. According to the description of patent application WO2020/055295, the formulation is applied by airbrushing.

Finally, it should be noted that in the state of the art there are no inks capable of simultaneously stabilising organic pigments and inorganic particles with flame-retardant properties, due to their different nature. In this sense, the present invention provides for the formulation of an ink composition that is capable of providing a good chromatic effect while maintaining the flame-retardant property when it is deposited on any type of fabric without the need for prior preparation thereof. For this, the ink composition according to the present invention allows for the simultaneous stabilisation of organic pigments, responsible for the chromatic function, and inorganic particles responsible for the flame-retardant function.

### DESCRIPTION OF THE INVENTION

Throughout the description and the claims, the word "comprises" and its variants do not intend to exclude other technical features, additives, components or steps. Moreover, the word "comprises" includes the case of "consists of". For those skilled in the art, other objects, advantages and features of the invention may be partially deduced from both the description and the embodiment of the invention.

The present invention is a flame-retardant hybrid ink applicable by inkjet drop-on-demand (DoD) technology which simultaneously provides a chromatic and flame-retardant effect when printed on textiles.

The term "textile" as used in the present invention refers to any natural or synthetic material that has been made from threads, filaments or fibres, of any size, including micro and nanofibres, joined by mechanical, thermal or chemical processes. Examples of materials with which textiles can be made, by way of example, but not limitation, are cotton, hemp, wood, wool, linen, polyester, nylon, polyethylene, polypropylene, elastomers, silk and Lycra, in a pure state or combined therebetween.

The term "frit" as used in the present invention refers to a mixture of inorganic compounds or particles that have been subjected, after mixing, to a melting process and subsequent rapid cooling to obtain an amorphous glassy compound, in other words, without a crystalline structure, and which composition is expressed in oxide form. Once the amorphous glassy compound is obtained, it is ground to obtain the frit particle with the desired particle size.

The hybrid ink object of the invention comprises at least one type of inorganic particle responsible for conferring the flame-retardant property to the printed fabric, in a percentage by weight of the ink comprised between 5% and 15% and with a particle size (D90) smaller than 500 nm.

The inorganic particle is characterised in that it has a melting temperature comprised between 550°C and 3500°C, preferably between 618°C and 2750°C.

Said inorganic particle is selected from the group comprising ZrSiO₄, ZnO, Al₂O₃, ZrO₂, ceramic frit with a softening temperature comprised between 500°C and 1000°C, SiO₂, mullite, sodium feldspar, potassium feldspar, lithium feldspar, kaolinitic clays, illite clays, tungsten oxide, dolomite, kaolin, barium oxide, bentonite, wollastonite, tin oxide, nepheline, bismuth oxide, boron oxide, colemanite, inorganic carbonates, inorganic phosphates, manganese oxide, spodumene, talc, magnesium oxide, cristobalite, rutile, anatase or a mixture thereof.

The softening temperature of the ceramic frits according to the invention is determined by heating optical microscopy, using, for example, the Linseis L74 heating microscope.

Preferably, the inorganic particle is selected from the group comprising ZrSiO₄, ZnO, Al₂O₃, ZrO₂, ceramic frit with a softening temperature comprised between 500°C and 1000°C, SiO₂, mullite or a mixture thereof. These inorganic particles enable all the requirements of DoD technology to be met in a more efficient and environmentally-friendly manner, both in terms of energy use and the use of raw materials, given the ease of grinding presented by these particles to achieve the required D90 particle size of 500 nm, as well as the good stability of the flame-retardant hybrid ink made with said particles.

Said particles were selected as preferred particles after the different assays on the capacity of the inorganic particles with a suitable melting temperature for the invention, both to reduce their particle size via grinding and as regards dispersibility and stability in the formulation of the ink.

The present invention also comprises at least one organic pigment, in a percentage by weight of the ink comprised between 4% and 15% and which is selected from the group comprising cyan, cobalt blue, turquoise blue, violet, magenta, red, yellow, orange, black, white, green, grey or a mixture thereof. The present invention also comprises that the organic pigment and the dispersant are used in the form of already dispersed organic pigment concentrates with a percentage by weight of dispersant with respect to the total weight of organic pigment comprised between 4% and 120%.

The term "organic pigment" as used in the present invention refers to any insoluble material in the ink medium, of natural or synthetic origin and characterised in that it comprises double bonds, triple bonds and/or organic chemical groups (amine, sulphone, chlorine, hydroxyl, carboxyl, bromine, etc.) responsible for changing the colour of reflected or transmitted light as a result of wavelength selective absorption, giving rise to a certain colour. Examples of organic pigments, by way of example, but not limitation, are monoazo pigments (yellow 1 pigment, red 3 pigment, red 187 pigment, orange 36 pigment, etc.), diazo pigments (yellow 13 pigment, yellow 17 pigment, red 144 pigment, etc.), phthalocyanine-based pigments (blue 15 pigment, blue 15:1 pigment, green 7 pigment, green 36 pigment), isoindolinone-based pigments, dioxazine-based pigments, anthraquinone pigments, quinacridone-based pigments, perylene pigments or a mixture thereof.

To fix the organic pigments and particles to the textile, it is necessary to include a resin in the formulation of the hybrid ink. In this sense, the present invention comprises at least one resin that is dispersible in water and heat-curable at a temperature below 170°C, in a percentage by weight of the ink comprised between 5% and 20%. The resin is selected from the group comprising urethane resin with polyether groups, urethane resin with polyester groups, urethane resin with polycarbonate groups, acrylic resin or a mixture thereof.

The water-dispersible and heat-curable resins can be formulated directly or commercial resins can be used. Examples of commercial resins, by way of example, but not limitation, are Joncryl HPD, Joncryl 8985, Cromoelastic SE, Cromoelastic NI, Edolan SN and Edolan SE.

The flame-retardant hybrid ink object of the invention also comprises water in a percentage by weight comprised between 20% and 35%. In addition, along with the water, the hybrid ink comprises a solvent, soluble in water, from the glycol family, in a percentage by weight comprised between 20% and 60%. The water-soluble solvent is selected from the group comprising monoethylene glycol, monopropylene glycol, ethylene glycol propyl ether, 1,2,3-propanetriol, ethylene glycol n-butyl ether, diethylene glycol, diethylene glycol methyl ether, diethylene glycol ethyl ether, diethylene glycol n-butyl ether, triethylene glycol, triethylene glycol methyl ether, triethylene glycol ethyl ether, triethylene glycol n-butyl ether, tripropylene glycol methyl ether, polyethylene glycol, 2,3-butanediol and 1,5-pentanediol or a mixture thereof.

The water-soluble solvent can be formulated directly or commercial products can be used. Examples of commercial solvents, by way of example, but not limitation, are Butyl Carbitol, Dipropylene Glycol, Dowanol DPnB Glycol Ether, Dowanol PPH Glycol Ether, Hexyl Carbitol and Butyl Cellosolve.

The fact that the hybrid ink contains water provides an environmental advantage over other formulations based on hydrocarbons and non-polar solvents. However, this highly polar liquid medium in DoD inkjet formulations also poses an added difficulty when it comes to simultaneously stabilising inorganic particles and organic pigments, of an organic nature. After performing numerous experimental assays, it has been discovered that the required simultaneous stabilisation is achieved by means of optimally selecting the concentration of the dispersants for both types of materials. To that end, the hybrid ink composition comprises:
- At least one dispersant for inorganic particles in a percentage by weight of the ink comprised between 0.1% and 10%. Examples of dispersants for inorganic particles, by way of example, but not limitation, are polyacrylate salt, acrylate copolymer, alkoxides, non-ionic modified fatty acid derivatives, carboxylic acid salt, phosphoric polyether, polycarboxylic acid salt or a mixture thereof. The dispersants for inorganic particles can be formulated directly or commercial products can be used such as Solsperse 40000, Solsperse W320, Solsperse 43000, Disperbyk 184, Disperbyk 185, Disperbyk 190, Tego Dispers 740W and Tego Dispers 760, Joncryl 57, Joncryl 60, Joncryl 63.
- At least one dispersant for organic pigments, in a percentage by weight of the ink comprised between 0.16% and 12%. When already dispersed organic pigment concentrates are used in the composition, said concentrates are selected in a percentage by weight with respect to the total weight of organic pigment comprised between 4% and 120%. Examples of dispersant for organic pigments, by way of example, but not limitation, are copolymer with organic pigment-affinic groups, solution of dipropylene glycol monomethyl ether and high molecular weight copolymers with organic pigment-affinic groups, solution of 2-methyl-2H-isothiazol-3-one and high molecular weight copolymers with organic pigment-affinic groups, quaternary ammonium salt-based copolymer, alcoholic solution of copolymer with organic pigment-affinic groups or a mixture thereof. The dispersants for organic pigments can be formulated directly or commercial products can be used such as Disperbyk 192, Disperbyk 199, Solsperse 47000, Solsperse 27000, Solsperse 20000 and Solsperse 54000.

Additionally, in its formulation the hybrid ink object of the invention also comprises at least one wetting agent in a percentage by weight of the ink comprised between 0.05% and 1%. The wetting agent is selected from the group comprising a mixture of ethers with polyethylene-polypropylene glycol with monobenzyl ether and C8-C10 alcohols, polyether-polysiloxane copolymer, anionic surfactants, non-ionic surfactants or a mixture thereof.

Moreover, the flame-retardant hybrid ink comprises at least one anti-foaming agent to prevent the formation of bubbles when in the printing circuit and when printing occurs. The content of anti-foaming agent is comprised between 0.05% and 1% of the weight of the ink, and is selected from the group comprising modified silicones, polydimethylsiloxanes, mineral oil derivatives, fatty acid derivatives or a mixture thereof.

A method for measuring the flame retardant property in the textile sector is the standard UNE-EN ISO 6941:2003. The standard UNE-EN ISO 6941:2003 is a method for measuring the flame spread of vertically oriented textiles and textile products when they are subjected to a small defined flame. The method consists of applying a flame from a lighter to the surface of the lower edge of the textile specimen that is oriented vertically and that has dimensions of 560 mm high and 170 mm wide. Each of the specimens is placed in the specimen holder that contains three cotton marker threads, each located at a certain distance from the lower edge of the specimen. The test flame is then applied for 10 seconds. After 10 seconds, the flame is removed and the flame-spread time is recorded; in other words, the time during which the flame generated on the textile spreads vertically until the upper (third) thread breaks; in other words, the thread farthest from the flame. In this sense, the flame-retardant hybrid ink composition object of the invention is characterised in that it provides the printed fabric with a flame-spread time of 20 seconds or less and without reaching the upper thread (third thread) when the quantity of ink deposited on said fabric is 20 g/m² or higher.

Since the flame-retardant hybrid ink object of the invention has water, it may be necessary to incorporate preservatives that prevent bacteria and other types of microorganisms that degrade the composition from developing. Therefore, the water-based ink of the present invention may comprise a preservative in a percentage by weight comprised between 0.05% and 0.1%, which is selected from the group comprising a mixture of 1,2-benzisothiazol-3-one and 1,2-benzisothiazol-3(2H)-one, 2-methyl-2H-isothiazol-3-one, bronopol, sodium pyrithione, tetramethyl acetylene diurea or a mixture thereof.

In a preferred embodiment of the present invention, the flame-retardant hybrid ink comprises:
a. ZrSiO₄ particles, in a percentage by weight of the ink comprised between 5% and 15%, with a particle size (D90) less than 500 nm.
b. At least one organic pigment in a percentage by weight of the ink comprised between 4% and 15% and which is selected from the group comprising cyan, cobalt blue, turquoise blue, violet, magenta, red, yellow, orange, black, white, green, grey or a mixture thereof.
c. At least one resin that is dispersible in water and heat-curable at a temperature below 170°C in a percentage by weight of the ink comprised between 5% and 20%.
d. Water in a percentage by weight of the ink comprised between 20% and 35%.
e. A water-soluble solvent from the glycol family in a percentage by weight of the ink comprised between 20% and 60%.
f. At least one dispersant for the inorganic particles of ZrSiO₄ in a percentage by weight of the ink comprised between 0.1% and 10%.
g. At least one dispersant for organic pigments in a percentage by weight of the ink comprised between 0.16% and 12%. When already dispersed organic pigment concentrates are used in the composition, said concentrates are selected with a percentage by weight of the dispersant with respect to the total weight of organic pigment comprised between 4% and 120%.
h. At least one wetting agent in a percentage by weight of the ink comprised between 0.05% and 1%.
i. At least one anti-foaming agent in a percentage by weight of the ink comprised between 0.05% and 1%.

The hybrid ink object of the invention also provides that the inorganic particle is a ceramic frit. In this sense, the ceramic frit has a softening temperature comprised between 500°C and 1000°C.

In another preferred embodiment of the present invention, the flame-retardant hybrid ink comprises:
a. Ceramic frit particles with a softening temperature comprised between 500°C and 1000°C, in a percentage by weight of the ink comprised between 5% and 15%, with a particle size (D90) less than 500 nm.
b. At least one organic pigment in a percentage by weight of the ink comprised between 4% and 15% and which is selected from the group comprising cyan, cobalt blue, turquoise blue, violet, magenta, red, yellow, orange, black, white, green, grey or a mixture thereof.
c. At least one resin that is dispersible in water and heat-curable at a temperature below 170°C in a percentage by weight of the ink comprised between 5% and 20%.
d. Water in a percentage by weight of the ink comprised between 20% and 35%.
e. A water-soluble solvent from the glycol family in a percentage by weight of the ink comprised between 20% and 60%.
f. At least one dispersant for the inorganic particles of ceramic frits in a percentage by weight of the ink comprised between 0.1% and 10%.
g. At least one dispersant for organic pigments in a percentage by weight of the ink comprised between 0.16% and 12%. When already dispersed organic pigment concentrates are used in the composition, said concentrates are selected with a percentage by weight of the dispersant with respect to the total weight of organic pigment comprised between 4% and 120%.
h. At least one wetting agent in a percentage by weight of the ink comprised between 0.05% and 1%.
i. At least one anti-foaming agent in a percentage by weight of the ink comprised between 0.05% and 1%.

In the formulation of inks for DoD inkjet technology, it is essential to define a series of properties that ensure their correct behaviour. In this sense, it is worth noting the value of the viscosity based on the shear rate or derived from the transverse deformation with respect to time, both when the water-based ink is practically at rest (shear rate at 10 s⁻¹) and when it is in motion in the printing equipment circuit (shear rate comprised between 100 s⁻¹ and 1000 s⁻¹). The shear rate was measured with an Anton Paar model MCR102 cone-plate rheometer. The method for measurement consists of placing the water-based ink on a horizontal heated plate. Subsequently, the cone lowers and begins to rotate, measuring the torque. From the torque value, the viscosity value is calculated at a given temperature and shear rate. In this sense, the water-based ink object of the present invention is characterised in that it has the following viscosity values at 40 °C based on the shear rate:
- Between 3 cP and 20 cP at 10 s⁻¹ shear rate.
- Between 3 cP and 20 cP at 100 s⁻¹ shear rate.
- Between 6 cP and 20 cP at 1000 s⁻¹ shear rate.

In the field of inkjet inks, the use of the centipoise unit (cP) is common, where 1 cP is equivalent to 0.001 Pa s in the International System of Units.

Another fundamental property of ink in the field of DoD inkjet is surface tension, since it ensures that the drop exits the print head correctly and is deposited on the textile without expanding, which would cause a loss of definition of the printed motif. In this sense, the flame-retardant hybrid ink object of the invention is characterised in that it has a surface tension value comprised between 15 mN/m and 35 mN/m.

### PREFERRED EMBODIMENTS

The following examples are provided for illustrative purposes and are not intended to limit the present invention. Moreover, the present invention covers all possible combinations of particular and preferred embodiments indicated herein.

The following flame-retardant hybrid ink compositions were prepared:

**Table 1**

| **COMPONENT** | **1** | **2** | **3** | **4** | **5** | **6** | **7** |
|---|---|---|---|---|---|---|---|
| Water | 25 | 28 | 22 | 20 | 26 | 35 | 25.99 |
| 1,2,3-propanetriol | 11.24 | 18 | 14.6 | 24.81 | 10.2 | 18 | 28 |
| Monoethylene glycol | 10 | 4.75 | 5 | 5 | 5 | 5.5 | 15 |
| Dipropylene qlycol | 1.25 | 3.1 | 5 | 3.5 | | | 1.7 |
| 1,3-butanediol | 3 | 5 | 4 | 7 | 3 | 5.8 | 6.5 |
| 1,5-pentanediol | 5 | 8 | 5 | 3 | 2 | 4 | 7 |
| Cyan organic pigment | 4 | | | | | | 4 |
| Magenta organic pigment | | 5.5 | | | | | |
| Yellow organic pigment | | | 7 | | | | |
| Black organic pigment | | | | 7.5 | | | |
| Orange organic pigment | | | | | 15 | | |
| Green organic pigment | | | | | | 6.5 | |
| ZrSiO₄ | | | | | 5 | | 1 |
| Ceramic frit | | | 15 | | | | 5 |
| ZnO | 15 | | | | | | |
| Al₂O₃ | | | | | | 7.25 | |
| Mullite | | 10 | | | | | |
| ZrO₂ | | | | 6.5 | | | |
| Polyurethane resin with polyester groups | 12 | 6.5 | 9.25 | 12 | 20 | 5 | 4 |
| Polyurethane resin with polyether groups | | 1.5 | | | | 3.5 | 1 |
| Polyurethane resin with polycarbonate groups | | | | | | 0.25 | |
| Acrylic resin | 3 | | | | | | |
| Polyacrylate salt | | | 4.5 | | 0.1 | | |
| Acrylate copolymer | 8 | | | | | | 0.05 |
| Non-ionic modified fatty acid derivative | 2 | | | | | 2.75 | 0.15 |
| Alkoxides | | | | 0.75 | | | |
| Polycarboxylic acid salt | | 3.5 | | | | 0.5 | |
| Carboxylic acid salt | | | 2 | | | | |
| Phosphoric polyether | | 1 | | 2.5 | 0.1 | | |
| Copolymer with organic pigment-affinic groups | 0.16 | 4.4 | | | | 1.7 | 0.16 |
| Solution of dipropylene glycol monomethyl ether and high molecular weight copolymer with organic pigment-affinic groups | | | 6.3 | 4.25 | | | |
| Quaternary ammonium salt-based copolymer | | | | 2.69 | 11.5 | 3.5 | |
| Wetting agent based on a mixture of ethers with polyethylene-polypropylene glycol with monobenzyl ether and C8-C10 alcohols | 0.3 | | | | 1 | 0.15 | 0.3 |
| Polyether polysiloxane copolymer-based wetting agent | | 0.5 | | 0.35 | | | |
| Non-ionic surfactant wetting agent | | | 0.15 | | | | |
| Modified silicone anti-foaming agent | 0.05 | | 0.1 | | 0.5 | 0.35 | 0.15 |
| Polydimethylsiloxane anti-foaming agent | | 0.15 | | 0.1 | 0.5 | 0.15 | |
| Preservative based on a mixture of 1,2-benzisothiazol-3-one and 1,2-benzisothiazol-3(2H)-one, 2-methyl-2H-isothiazol-3-one | | 0.1 | 0.1 | 0.05 | 0.1 | 0.1 | |

The properties in terms of viscosity and surface tension of each of the flame-retardant hybrid inks are indicated below.

**Table 2**

| Ink properties | 1 | 2 | 3 | 4 | 5 | 6 | 7 |
|---|---|---|---|---|---|---|---|
| Viscosity (40°C) at 10 s⁻¹ (CP) | 15.2 | 11.75 | 11.5 | 14.8 | 10.05 | 6.75 | 15.25 |
| Viscosity (40°C) at 100 s⁻¹ (CP) | 15.25 | 12.1 | 12.20 | 15.2 | 9.90 | 7.01 | 15.20 |
| Viscosity (40°C) at 1000 s⁻¹ (CP) | 15.15 | 12.05 | 12.15 | 15.95 | 10.01 | 7.1 | 15.20 |
| Surface tension (mN m) | 22 | 28 | 17 | 16 | 18 | 35 | 20 |

The flame-retardant hybrid inks 1, 2, 3, 4, 5, 6 and 7 were applied with DoD inkjet equipment, printing each ink on six specimens of 100% cotton fabric, six specimens of 50% cotton and 50% polyester fabric and six specimens of 100% polyester fabric. In all cases, the quantity of ink deposited on each specimen was 20 g/m². Subsequently, each printed specimen was subjected to a heat treatment at 160°C for 5 minutes.

The printed and heat-treated fabric specimens were evaluated both from the point of view of colorimetric performance and flame retardant property.

The colorimetric study focused on determining the CieLa*b* colorimetric coordinates using a spectrophotometer (Minolta or similar), with D65 lighting and detection conditions of 10°. The results express the mean values of L, a* and b* for the six specimens of each type of fabric. As for the flame retardant property, a flame was applied to each printed and heat-treated fabric specimen for ten seconds, the flame-spread time was measured and the mean value of the specimens of each type of fabric was calculated, in accordance with the method for measurement indicated in the standard UNE-EN ISO 6941:2003.

Next, the mean values of the colorimetric coordinates obtained for the fabrics of each type and with each ink are shown:

**Table 3**

| | 100% cotton fabric | | | 50% cotton 50% polyester fabric | | | 100% polyester fabric | | |
|---|---|---|---|---|---|---|---|---|---|
| Ink composition applied on the fabric | L | a* | b* | L | a* | b* | L | a* | b* |
| 1 | 57.05 | -19.85 | -30.20 | 58.01 | -19.5 | -30.10 | 67.50 | -18.15 | -25.10 |
| 2 | 54.10 | 42.5 | -7.50 | 59.60 | 30.50 | -7.70 | 67.25 | 20.90 | -3.25 |
| 3 | 83.50 | 2.10 | 75.40 | 84.35 | 2.60 | 74.7 | 85.10 | 2.55 | 79.85 |
| 4 | 9.95 | 0.45 | 1.70 | 15.90 | 1.42 | 1.40 | 19.45 | 0.10 | 1.25 |
| 5 | 57.60 | 58.33 | 71.96 | 64.55 | 48.59 | 67.10 | 67.86 | 35.84 | 58.14 |
| 6 | 51.90 | -55.15 | 6.55 | 58.19 | -50.83 | 6.05 | 65.25 | -44.05 | 5.34 |
| 7 | 57.84 | -20.02 | -30.35 | 63.10 | -12.52 | -25.15 | 68.15 | -8.92 | -14.92 |

The evaluation of the flame spread is shown in the following table, where the mean value of flame-spread time obtained for each type of fabric and with each ink is indicated. It is also important to indicate that in no case did the flame reach the upper thread (third thread). As can be seen, in all cases, a mean value of flame-spread time of 20 seconds or less was obtained for the three types of fabric (a value of 0 seconds indicates that the flame does not spread).

| | **Table 4** | | |
|---|---|---|---|
| | 100% cotton fabric | 50% cotton 50% polyester fabric | 100% polyester fabric |
| Ink composition applied on the fabric | Flame-spread time (s) UNE-EN ISO 6941:2003 | Flame-spread time (s) UNE-EN ISO 6941:2003 | Flame-spread time (s) UNE-EN ISO 6941:2003 |
| 1 | 0 | 2 | 4 |
| 2 | 0 | 2 | 4 |
| 3 | 5 | 6 | 7 |
| 4 | 12 | 12 | 14 |
| 5 | 14 | 15 | 17 |
| 6 | 5 | 7 | 8 |
| 7 | 16 | 19 | 20 |

## Claims

1. A flame-retardant hybrid ink composition applicable using inkjet drop-on-demand (DoD) technology of the type that simultaneously provides a chromatic and flame-retardant effect on textiles, and comprising:
a. At least one type of inorganic particle, with a melting temperature comprised between 550°C and 3500°C and with a particle size (D90) less than 500 nm, in a percentage by weight of the ink comprised between 5% and 15%.
b. At least one organic pigment in a percentage by weight of the ink comprised between 4% and 15% and which is selected from the group comprising cyan, cobalt blue, turquoise blue, violet, magenta, red, yellow, orange, black, white, green, grey or a mixture thereof.
c. At least one resin that is dispersible in water and heat-curable at a temperature below 170°C in a percentage by weight of the ink comprised between 5% and 20%.
d. Water in a percentage by weight of the ink comprised between 20% and 35%.
e. A water-soluble solvent from the glycol family in a percentage by weight of the ink comprised between 20% and 60%.
f. At least one dispersant for inorganic particles in a percentage by weight of the ink comprised between 0.1% and 10%.
g. At least one dispersant for organic pigments in a percentage by weight of the ink comprised between 0.16% and 12%.
h. At least one wetting agent in a percentage by weight of the ink comprised between 0.05% and 1%.
i. At least one anti-foaming agent in a percentage by weight of the ink comprised between 0.05% and 1%.

2. The flame-retardant hybrid ink composition according to claim 1, wherein the at least one type of inorganic particle is selected from the group comprising ZrSiO₄, ZnO, Al₂O₃, ZrO₂, ceramic frit with a softening temperature comprised between 500°C and 1000°C, SiO₂, mullite, sodium feldspar, potassium feldspar, lithium feldspar, kaolinitic clays, illite clays, tungsten oxide, dolomite, kaolin, barium oxide, bentonite, wollastonite, tin oxide, nepheline, bismuth oxide, boron oxide, colemanite, inorganic carbonates, inorganic phosphates, manganese oxide, spodumene, talc, magnesium oxide, cristobalite, rutile, anatase or a mixture thereof.

3. The flame-retardant hybrid ink composition according to the preceding claim, wherein the at least one type of inorganic particle is preferably selected from the group comprising ZrSiO₄, ZnO, Al₂O₃, ZrO₂, ceramic frit with a softening temperature comprised between 500°C and 1000°C, SiO₂, mullite or a mixture thereof.

4. The flame-retardant hybrid ink composition according to claim 1, wherein the at least one type of inorganic particle is **characterised in that** it has a melting temperature comprised, preferably, between 618°C and 2750°C.

5. The flame-retardant hybrid ink composition according to any of the preceding claims, wherein the organic pigment and the dispersant are used in the form of already dispersed organic pigment concentrates with a percentage by weight of dispersant with respect to the total weight of organic pigment comprised between 4% and 120%.

6. The flame-retardant hybrid ink composition according to any of the preceding claims, wherein the viscosity values at 40°C based on the shear rate are:
a. Between 3 mPa.s (cP) and 20 mPa.s (cP) at 10 s⁻¹ shear rate.
b. Between 3 mPa.s (cP) and 20 mPa.s (cP) at 100 s⁻¹ shear rate.
c. Between 6 mPa.s (cP) and 20 mPa.s (cP) at 1000 s⁻¹ shear rate.

7. The flame-retardant hybrid ink composition according to any of the preceding claims, wherein the surface tension value is comprised between 15 mN/m and 35 mN/m.

8. The flame-retardant hybrid ink composition according to any of the preceding claims, wherein the printed fabric has a flame-spread time of 20 seconds or less when the quantity of ink deposited on said fabric is 20 g/m² or higher.

9. The flame-retardant hybrid ink composition according to any of the preceding claims, wherein the water-dispersible and heat-curable resin is selected from the group comprising urethane resin with polyether groups, urethane resin with polyester groups, urethane resin with polycarbonate groups, acrylic resin or a mixture thereof.

10. The flame-retardant hybrid ink composition according to any of the preceding claims, wherein the water-soluble solvent is selected from the group comprising monoethylene glycol, monopropylene glycol, ethylene glycol propyl ether, 1,2,3-propanetriol, ethylene glycol n-butyl ether, diethylene glycol, diethylene glycol methyl ether, diethylene glycol ethyl ether, diethylene glycol n-butyl ether, triethylene glycol, triethylene glycol methyl ether, triethylene glycol ethyl ether, triethylene glycol n-butyl ether, tripropylene glycol methyl ether, polyethylene glycol, 2,3-butanediol, 1,5-pentanediol or a mixture thereof.

11. The flame-retardant hybrid ink composition according to any of the preceding claims, wherein the wetting agent is selected from the group comprising a mixture of ethers with polyethylene-polypropylene glycol with monobenzyl ether and C8-C10 alcohols, polyether-polysiloxane copolymer, anionic surfactants and non-ionic surfactants or a mixture thereof.

12. The flame-retardant hybrid ink composition according to any of the preceding claims, wherein the anti-foaming agent is selected from the group comprising modified silicones, polydimethylsiloxanes, mineral oil derivatives, fatty acid derivatives or a mixture thereof.

13. The flame-retardant hybrid ink composition according to any of the preceding claims, wherein the composition comprises a preservative in a percentage by weight of the ink comprised between 0.05% and 0.1% and the preservative is selected from the group comprising a mixture of 1,2-benzisothiazol-3-one and 1,2-benzisothiazol-3(2H)-one and 2-methyl-2H-isothiazol-3-one, bronopol, sodium pyrithione and tetramethyl acetylene diurea or a mixture thereof.

## Patentansprüche

1. Flammhemmende Hybrid-Tintenzusammensetzung, die unter Verwendung der Drop-on-Demand(DoD)-Tintenstrahl-Technologie des Typs, der gleichzeitig eine chromatische und eine flammhemmende Wirkung auf Textilien ausübt, anwendbar ist und Folgendes umfasst:
a. Mindestens eine Art anorganischer Partikel mit einer Schmelztemperatur zwischen 550 °C und 3.500 °C und einer Partikelgröße (D90) von weniger als 500 nm in einem Gewichtsanteil der Tinte zwischen 5 % und 15 %.
b. Mindestens ein organisches Pigment in einem Gewichtsanteil der Tinte zwischen 4 % und 15 %, das aus der Gruppe ausgewählt ist, die Cyan, Kobaltblau, Türkisblau, Violett, Magenta, Rot, Gelb, Orange, Schwarz, Weiß, Grün, Grau oder eine Mischung davon umfasst.
c. Mindestens ein in Wasser dispergierbares und bei einer Temperatur unter 170°C wärmehärtbares Harz in einem Gewichtsanteil der Tinte zwischen 5 % und 20 %.
d. Wasser in einem Gewichtsanteil der Tinte zwischen 20 % und 35 %.
e. Ein wasserlösliches Lösemittel aus der Glykolfamilie in einem Gewichtsanteil der Tinte zwischen 20 % und 60 %.
f. Mindestens ein Dispergiermittel für anorganische Partikel in einem Gewichtsanteil der Tinte zwischen 0,1 % und 10 %.
g. Mindestens ein Dispergiermittel für organische Pigmente in einem Gewichtsanteil der Tinte zwischen 0,16 % und 12 %.
h. Mindestens ein Benetzungsmittel in einem Gewichtsanteil der Tinte zwischen 0,05 % und 1 %.
i. Mindestens ein Antischaummittel in einem Gewichtsanteil der Tinte zwischen 0,05 % und 1 %.

2. Flammhemmende Hybrid-Tintenzusammensetzung gemäß Anspruch 1, wobei die mindestens eine Art anorganischer Partikel aus der Gruppe ausgewählt ist, die ZrSiO₄, ZnO, Al₂O₃, ZrO₂, keramische Fritten mit einer Erweichungstemperatur zwischen 500 °C und 1.000 °C, SiO₂, Mullit, Natriumfeldspat, Kalifeldspat, Lithiumfeldspat, kaolinitische Tone, Illit-Tone, Wolframoxid, Dolomit, Kaolin, Bariumoxid, Bentonit, Wollastonit, Zinnoxid, Nephelin, Wismutoxid, Boroxid, Colemanit, anorganische Carbonate, anorganische Phosphate, Manganoxid, Spodumen, Talk, Magnesiumoxid, Cristobalit, Rutil, Anatas oder eine Mischung davon umfasst.

3. Flammhemmende Hybrid-Tintenzusammensetzung gemäß dem vorhergehenden Anspruch, wobei die mindestens eine Art anorganischer Partikel vorzugsweise aus der Gruppe ausgewählt ist, die ZrSiO₄, ZnO, Al₂O₃, ZrO₂, keramische Fritten mit einer Erweichungstemperatur zwischen 500 °C und 1.000 °C, SiO₂, Mullit oder eine Mischung davon umfasst.

4. Flammhemmende Hybrid-Tintenzusammensetzung gemäß Anspruch 1, wobei die mindestens eine Art anorganischer Partikel **dadurch gekennzeichnet ist, dass** sie eine Schmelztemperatur aufweist, die vorzugsweise zwischen 618 °C und 2.750 °C liegt.

5. Flammhemmende Hybrid-Tintenzusammensetzung gemäß einem der vorhergehenden Ansprüche, wobei das organische Pigment und das Dispergiermittel in Form von bereits dispergierten organischen Pigmentkonzentraten verwendet werden, wobei der Gewichtsanteil des Dispergiermittels bezogen auf das Gesamtgewicht des organischen Pigments zwischen 4 % und 120 % liegt.

6. Flammhemmende Hybrid-Tintenzusammensetzung gemäß einem der vorhergehenden Ansprüche, wobei die Viskositätswerte bei 40 °C basierend auf der Schergeschwindigkeit wie folgt sind:
a. Zwischen 3 mPa.s (cP) und 20 mPa.s (cP) bei 10 s⁻¹ Schergeschwindigkeit.
b. Zwischen 3 mPa.s (cP) und 20 mPa.s (cP) bei 100 s⁻¹ Schergeschwindigkeit.
c. Zwischen 6 mPa.s (cP) und 20 mPa.s (cP) bei 1.000 s⁻¹ Schergeschwindigkeit.

7. Flammhemmende Hybrid-Tintenzusammensetzung gemäß einem der vorhergehenden Ansprüche, wobei der Oberflächenspannungswert zwischen 15 mN/m und 35 mN/m liegt.

8. Flammhemmende Hybrid-Tintenzusammensetzung gemäß einem der vorhergehenden Ansprüche, wobei das bedruckte Gewebe eine Flammausbreitungszeit von 20 Sekunden oder weniger aufweist, wenn die auf dem Gewebe aufgebrachte Tintenmenge 20 g/m² oder mehr beträgt.

9. Flammhemmende Hybrid-Tintenzusammensetzung gemäß einem der vorhergehenden Ansprüche, wobei das wasserdispergierbare und wärmehärtbare Harz aus der Gruppe ausgewählt ist, die Urethanharz mit Polyethergruppen, Urethanharz mit Polyestergruppen, Urethanharz mit Polycarbonatgruppen, Acrylharz oder eine Mischung davon umfasst.

10. Flammhemmende Hybrid-Tintenzusammensetzung gemäß einem der vorhergehenden Ansprüche, wobei das wasserlösliche Lösemittel aus der Gruppe ausgewählt ist, die Monoethylenglykol, Monopropylenglykol, Ethylenglykolpropylether, 1,2,3-Propantriol, Ethylenglykol-n-butylether, Diethylenglykol, Diethylenglykolmethylether, Diethylenglykolethylether, Diethylenglykol-n-butylether, Triethylenglykol, Triethylenglykolmethylether, Triethylenglykolethylether, Triethylenglykol-n-butylether, Tripropylenglykolmethylether, Polyethylenglykol, 2,3-Butandiol, 1,5-Pentandiol oder eine Mischung davon umfasst.

11. Flammhemmende Hybrid-Tintenzusammensetzung gemäß einem der vorhergehenden Ansprüche, wobei das Benetzungsmittel aus der Gruppe ausgewählt ist, die eine Mischung von Ethern mit Polyethylen-Polypropylenglykol mit Monobenzylether und C8-C10-Alkoholen, Polyether-Polysiloxan-Copolymer, anionische Tenside und nichtionische Tenside oder eine Mischung davon umfasst.

12. Flammhemmende Hybrid-Tintenzusammensetzung gemäß einem der vorhergehenden Ansprüche, wobei das Antischaummittel aus der Gruppe ausgewählt ist, die modifizierte Silikone, Polydimethylsiloxane, Mineralölderivate, Fettsäurederivate oder eine Mischung davon umfasst.

13. Flammhemmende Hybrid-Tintenzusammensetzung gemäß einem der vorhergehenden Ansprüche, wobei die Zusammensetzung ein Konservierungsmittel in einem Gewichtsanteil der Tinte zwischen 0,05 % und 0,1 % umfasst und das Konservierungsmittel aus der Gruppe ausgewählt ist, die eine Mischung aus 1,2-Benzisothiazol-3-on und 1,2-Benzisothiazol-3(2H)-on und 2-Methyl-2H-isothiazol-3-on, Bronopol, Natriumpyrithion und Tetramethylacetylendiharnstoff oder eine Mischung davon umfasst.

## Revendications

1. Composition d'encre hybride retardateur de flamme applicable à l'aide de la technologie jet d'encre goutte à la demande (DoD) du type qui fournit simultanément un effet chromatique et retardateur de flamme sur des textiles, et comprenant :
a. Au moins un type de particule inorganique, avec une température de fusion comprise entre 550 °C et 3500 °C et avec une taille de particule (D90) inférieure à 500 nm, dans un pourcentage en poids de l'encre compris entre 5 % et 15 %.
b. Au moins un pigment organique dans un pourcentage en poids de l'encre compris entre 4 % et 15 % et qui est choisi dans le groupe comprenant le cyan, bleu cobalt, bleu turquoise, violet, magenta, rouge, jaune, orange, noir, blanc, vert, gris ou un mélange de ceux-ci.
c. Au moins une résine dispersible dans l'eau et thermodurcissable à une température inférieure à 170 °C dans un pourcentage en poids de l'encre compris entre 5 % et 20 %.
d. Eau dans un pourcentage en poids de l'encre compris entre 20 % et 35 %.
e. Solvant hydrosoluble de la famille des glycols dans un pourcentage en poids de l'encre compris entre 20 % et 60 %.
f. Au moins un dispersant pour particules inorganiques dans un pourcentage en poids de l'encre compris entre 0,1 % et 10 %.
g. Au moins un dispersant pour pigments organiques dans un pourcentage en poids de l'encre compris entre 0,16 % et 12 %.
h. Au moins un agent mouillant dans un pourcentage en poids de l'encre compris entre 0,05 % et 1 %.
i. Au moins un agent anti-mousse dans un pourcentage en poids de l'encre compris entre 0,05 % et 1 %.

2. Composition d'encre hybride retardateur de flamme selon la revendication 1, dans lequel l'au moins un type de particule inorganique est choisi dans le groupe comprenant ZrSiO₄, ZnO, Al₂O₃, ZrO₂, la fritte céramique ayant une température de ramollissement comprise entre 500 °C et 1000 °C, SiO₂, la mullite, le feldspath sodique, le feldspath potassique, le feldspath de lithium, les argiles kaolinitiques, les argiles illites, les oxydes de tungstène, la dolomie, le kaolin, l'oxyde de baryum, la bentonite, la wollastonite, l'oxyde d'étain, la néphéline, l'oxyde de bismuth, l'oxyde de bore, la colémanite, les carbonates inorganiques, les phosphates inorganiques, l'oxyde de manganèse, le spodumène, le talc, l'oxyde de magnésium, la cristobalite, le rutile, l'anatase ou un mélange de ceux-ci.

3. Composition d'encre hybride retardateur de flamme selon la revendication précédente, dans laquelle l'au moins un type de particule inorganique est de préférence choisi dans le groupe comprenant ZrSiO₄, ZnO, Al₂O₃, ZrO₂, la fritte céramique ayant une température de ramollissement comprise entre 500 °C et 1000 °C, SiO₂, la mullite ou un mélange de ceux-ci.

4. Composition d'encre hybride retardateur de flamme selon la revendication 1, dans laquelle l'au moins un type de particule inorganique est **caractérisé en ce qu'**il a une température de fusion comprise, de préférence, entre 618 °C et 2 750 °C.

5. Composition d'encre hybride retardateur de flamme selon l'une quelconque des revendications précédentes, dans laquelle le pigment organique et le dispersant sont utilisés sous forme de concentrés de pigments organiques déjà dispersés avec un pourcentage en poids de dispersant par rapport au poids total de pigment organique compris entre 4 % et 120 %.

6. Composition d'encre hybride retardateur de flamme selon l'une quelconque des revendications précédentes, dans laquelle les valeurs de viscosité à 40 °C sur la base du taux de cisaillement sont :
a. Entre 3 mPa.s (cP) et 20 mPa.s (cP) à 10 s⁻¹ taux de cisaillement.
b. Entre 3 mPa.s (cP) et 20 mPa.s (cP) à 100 s⁻¹ taux de cisaillement.
c. Entre 6 mPa.s (cP) et 20 mPa.s (cP) à 1000 s⁻¹ taux de cisaillement.

7. Composition d'encre hybride retardateur de flamme selon l'une quelconque des revendications précédentes, dans laquelle la valeur de la tension de surface est comprise entre 15 mN/m et 35 mN/m.

8. Composition d'encre hybride retardateur de flamme selon l'une quelconque des revendications précédentes, dans laquelle le tissu imprimé a un temps de propagation des flammes de 20 secondes ou moins lorsque la quantité d'encre déposée sur ledit tissu est de 20 g/m² ou plus.

9. Composition d'encre hybride retardateur de flamme selon l'une quelconque des revendications précédentes, dans laquelle la résine dispersible dans l'eau et thermodurcissable est choisie dans le groupe comprenant la résine uréthane avec des groupes polyéthers, la résine uréthane avec des groupes polyesters, la résine uréthane avec des groupes polycarbonates, la résine acrylique ou un mélange de celles-ci.

10. Composition d'encre hybride retardateur de flamme selon l'une quelconque des revendications précédentes, dans laquelle le solvant hydrosoluble est choisi dans le groupe comprenant le monoéthylène glycol, le monopropylène glycol, l'éthylène glycol propyl éther, le 1,2,3-propanetriol, l'éther n-butylique d'éthylène glycol, le glycol de diéthylène, l'éther méthylique de diéthylène glycol, l'éther éthylique de diéthylène glycol, l'éther n-butylique de diéthylène glycol, le triéthylène glycol, l'éther méthylique de triéthylène glycol, l'éther éthylique de triéthylène glycol, l'éther n-butylique de triéthylène glycol, l'éther méthylique de tripropylène glycol, le polyéthylèneglycol, le 2,3-butanediol, le 1,5-pentanediol ou un mélange de ceux-ci.

11. Composition d'encre hybride retardateur de flamme selon l'une quelconque des revendications précédentes, dans laquelle l'agent mouillant est choisi dans le groupe comprenant un mélange d'éthers avec du polyéthylène-polypropylène glycol avec de l'éther monobenzylique et des alcools en C8-C10, du copolymère polyéther-polysiloxane, des tensioactifs anioniques et des tensioactifs non ioniques ou un mélange de ceux-ci.

12. Composition d'encre hybride retardateur de flamme selon l'une quelconque des revendications précédentes, dans laquelle l'agent anti-mousse est choisi dans le groupe comprenant les silicones modifiées, les polydiméthylsiloxanes, les dérivés d'huile minérale, les dérivés d'acides gras ou un mélange de ceux-ci.

13. Composition d'encre hybride retardateur de flamme selon l'une quelconque des revendications précédentes, dans laquelle la composition comprend un conservateur dans un pourcentage en poids de l'encre compris entre 0,05 % et 0,1 % et le conservateur est choisi dans le groupe comprenant un mélange de 1,2-benzisothiazol-3-one et de 1,2-benzisothiazol-3(2H)-one et de 2-méthyl-2H-isothiazole-3-one, de bronopol, de pyrithione sodique et de tétraméthyl acétylène diurée ou un mélange de ceux-ci.
